# EUROPEAN PATENT SPECIFICATION

(11) **EP 0 539 112 B1**
(45) Date of publication and mention of the grant of the patent: **18.01.1995**
(21) Application number: 92309453.6
(22) Date of filing: 16.10.1992
(51) Int. Cl.: B64D 15/04

(54) **An anti-icing arrangement for an aircraft wing**
Enteisungsvorrichtung für eine Flugzeugtragfläche
Dégivreur pour aile d'avion

(30) Priority: 19.10.1991 GB 9122227
(43) Date of publication of application: 28.04.1993
(73) Proprietor: BRITISH AEROSPACE PUBLIC LIMITED COMPANY, Farnborough, Hants. GU14 6YU (GB)
(72) Inventor: James, John F., British Aerospace Airbus Limited, Filton House, Bristol BS99 7AR (GB); Iles, Leonard E., British Aerospace Airbus Limited, Filton House, Bristol BS99 7AR (GB)

(56) References cited:
- DE-C- 746 714
- US-A- 4 603 824
- US-A- 4 615 499

## Description

This invention relates to anti-icing arrangements for aircraft wings and in particular to such arrangements including a telescopic air duct to conduct air from a fixed wing or "D-nose" portion to a leading edge slat.

It is known in such an arrangement for a telescopic air duct hingedly connected at one end to the fixed wing portion of the wing and at the other end to the leading edge slat to extend and contract in length according to the extent of deployment of the leading edge slat. Such an arrangement is known from the document US-A-4 603 824.

Such hinged installations tend to have extremely bulky spherical joints which cannot always be used when accommodation space within the wing or slat is at a premium.

It is an object of the present invention to provide an anti-icing arrangement for an aircraft wing giving an improved combination of movement and use of space within the wing and slat.

According to the present invention there is provided an anti-icing arrangement for an aircraft wing including a fixed wing portion, a leading edge slat movable with respect thereto between a datum cruise position and a deployed high lift position and a telescopic duct having telescopic tubular elements for conducting heated air between the fixed wing portion and the leading edge slat irrespective of the relative positions thereof, the duct being rigidly attached to the fixed wing portion at one end thereof and attached at the other end thereof to the leading edge slat by a universal joint.

The telescopic duct may have an axis of telescopic movement which may be curved and which generally follows the path of deployment of the leading edge slat. Such an arrangement necessitates only a much smaller frontal aperture in the leading edge portion for a slat deployment geometry having a curved path, as vertical movement of a central region of the duct can be substantially eliminated.

The universal joint may additionally allow limited relative translational movement between the leading edge slat and a said tubular element attached to the joint.

At least two telescopic tubular elements of the duct may slide with respect to one another upon bearings which permit limited angular deflection of their neutral axes with respect to one another.

The tubular telescopic duct may comprise at least three said telescopic tubular elements to allow for greater deployment of the leading edge slat.

The universal joint may comprise a pair of axially overlapping annular elements having a clearance fit therebetween to allow for limited radial relative movement of the two annular elements, a first of said elements having a generally cylindrical surface which is preferably chamfered at one end to ease joint assembly, said surface being slidably engageable by sealing means on the second of said elements to allow translational movement of the two elements relative to one another axially of the joint.

The sealing means may comprise at least one annular ring and preferably three rings in at least one groove formed in the second annular element. The ring or rings is/are preferably of resilient material, for example steel, formed to project from the groove into contact with the cylindrical surface on the first element

The sealing means may include a groove formed in the second element axially spaced from the at least one groove to receive a further annular ring of resilient deformable material, for example neoprene (Regd. Trade Mark) to form a gas tight seal with the first element.

The second element may have a surface which is co-extensible with the surface of the first element, slidable with respect thereto, and in which said groove or grooves is/are formed.

The co-extensive surface of the second element may be relieved in a radial direction at either end to allow only a small radial gap between the two surfaces in a central region of the generally cylindrical surface and yet relative pivotal movement of the first and second elements of the joint about axes in a plane normal to the neutral axis thereof. The small radial gap allows limited relative translational movement in a radial direction between the two elements.

A tubular element of the telescopic duct attached to the universal joint may have a portion cranked with respect to the axis of telescopic movement of the duct.

The universal joint may include an anti-rotation device to prevent relative axial rotation between the annular elements thereof.

The tubular element of the duct attached to the fixed wing portion may have the largest cross-sectional area of the tubular elements of the duct whereby the other tubular elements telescope within said element attached to the fixed wing portion.

The present invention will now be described by way of example with reference to the accompanying drawings, of which:-
Figure 1 is a cross-section through a leading edge of an aircraft wing showing a fixed leading edge portion and a leading edge slat in its retracted datum cruise position,
Figure 2 shows the leading edge slat in a deployed high lift position,

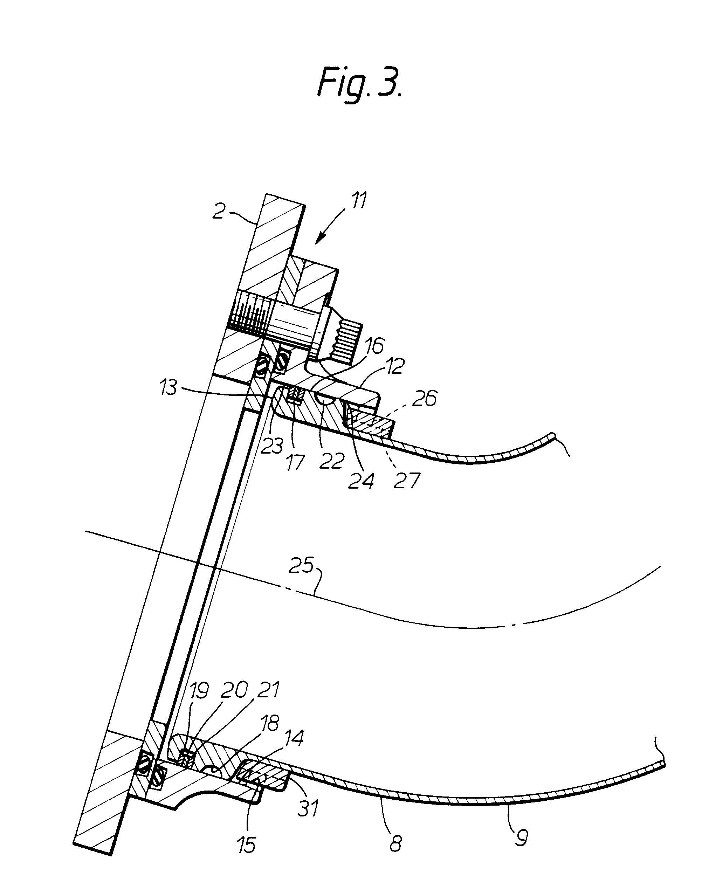

Figure 3 is a detail in section showing a universal joint, and

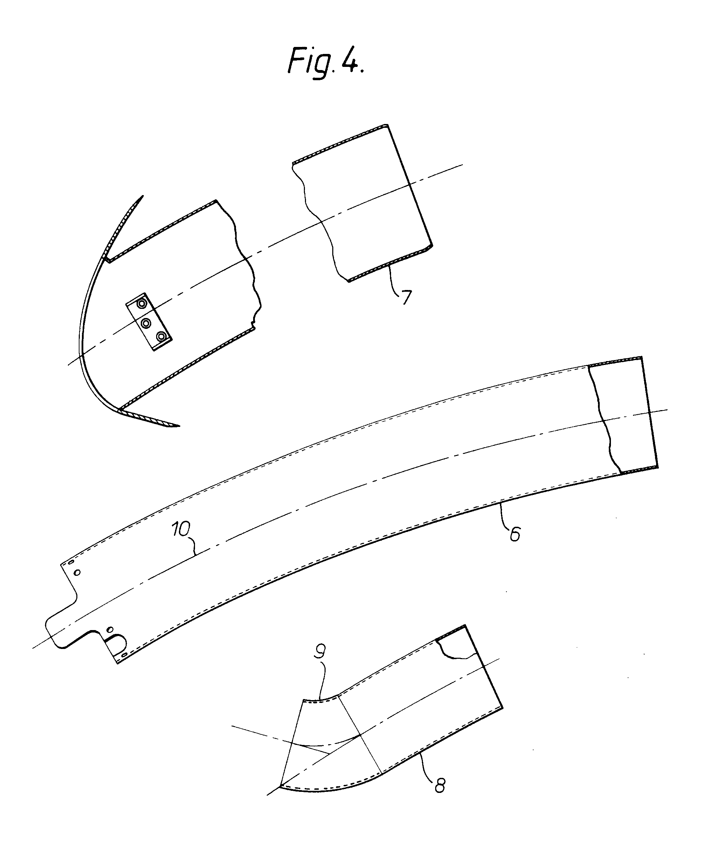

Figure 4 is a sectional view of three telescopic tubular elements of a telescopic duct.

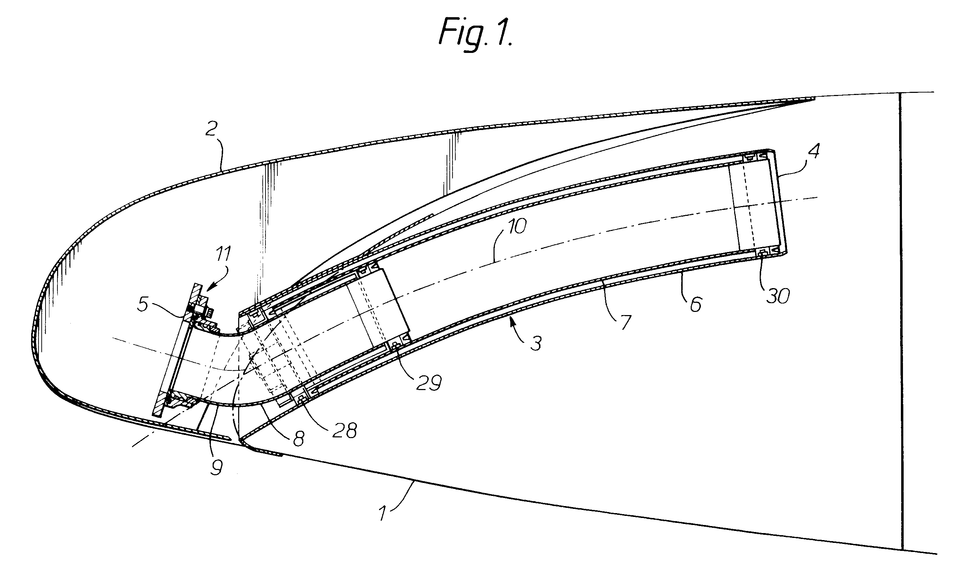

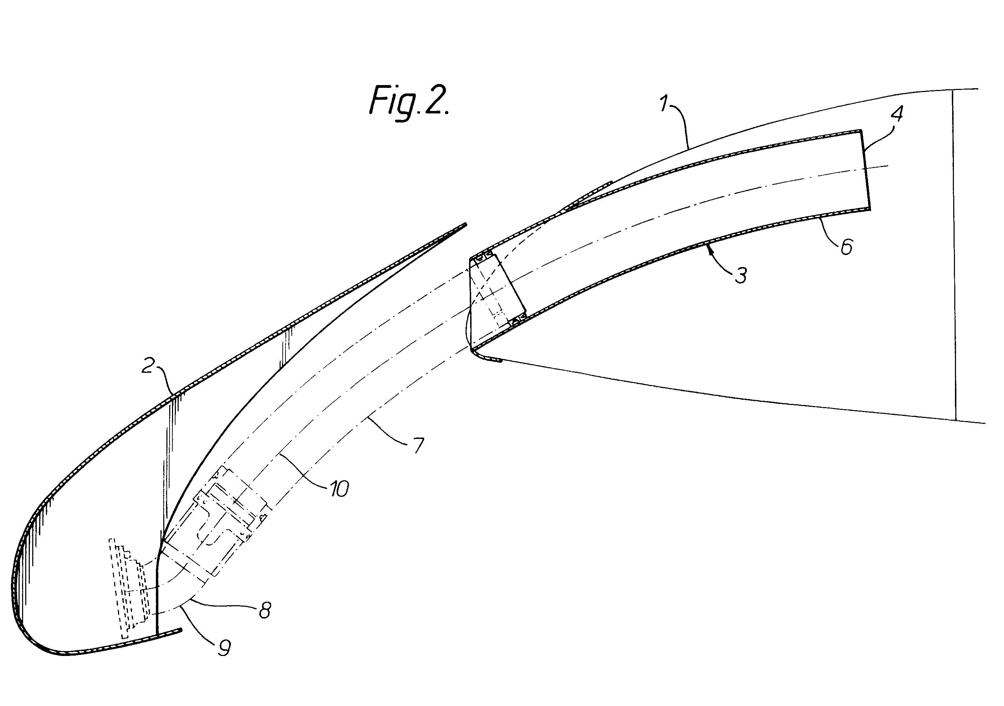

Referring to the drawings, an aircraft wing comprises a fixed wing portion 1 and a leading edge slat 2. The leading edge slat 2 is movable with respect to the fixed wing portion 1 between a datum cruise position, as shown in Figure 1, and a deployed high lift position, as shown in Figure 2.

A telescopic hot air duct 3 for conducting heated air from the fixed wing portion to the leading edge slat irrespective of the slat position is affixed at one end 4 to the fixed wing portion 1 and at the other end 5 to the leading edge slat 2. The telescopic duct has three mutually telescopic tubular elements 6, 7 and 8, the element 8 having a portion 9 cranked with respect to an axis 10 of telescopic movement of the duct (also the neutral axis of elements 6 and 7 of the duct). The cranked portion 9 is joined via a universal joint 11 to the leading edge slat. The universal joint 11 has an annular first element 12 and an annular second element 13 axially overlapping therewith and slidable axially with respect thereto. The first element 12 has a cylindrical internal surface 14 having a chamfer 15 at one end. The second element 13 has an external surface 16 co-extensive with the surface 14 on the first element and spaced at a small gap therefrom to allow limited translational movement therebetween in a radial direction. Formed in the external surface 16 are grooves 17 and 18. The groove 17 receives three steel rings 19, 20 and 21, biased into engagement with the internal surface 14, and the groove 18 receives an annular Neoprene seal 22 therein. The steel rings 19, 20, 21 are designed to flex independently of one another and prevent blowby of air under pressure. The Neoprene seal 22 is designed to form a gas tight seal between the annular first and second elements 12 and 13. Relative movement between the first and second elements 12 and 13 axially of the joint is allowed by sliding movement between the two surfaces 14 and 16. The external surface 16 is relieved at either end thereof to leave gaps 23 and 24 between the surfaces 14 and 16. These gaps allow relative rotation between the first and second annular elements 12 and 13 about axes normal to a neutral axis 25 of the universal joint 11.

It will be seen that the universal joint 11, whilst providing the limited degree of rotational movement required between the two elements 12 and 13 is not at all bulky and at the same time provides an effective gas tight seal.

An anti-rotation device for the universal joint 11 comprises a finger 26 engaged in a groove 27 cut in a clamp ring 31.

The telescopic elements 7 and 8 are mounted on bearings 28, 29, 30, each of which permits a limited degree of relative rotational movement between the elements about axes normal to the neutral axis of the duct.

## Claims

1. An anti-icing arrangement for an aircraft wing including a fixed wing portion (1), a leading edge slat (2) movable with respect thereto between a datum cruise position and a deployed high lift position and a telescopic duct (3) having telescopic tubular elements (6,7,8) for conducting heated air between the fixed wing portion (1) and the leading edge slat (2) irrespective of the relative positions thereof, characterised in that the duct (3) is rigidly attached to the fixed wing portion (1) at one end thereof and attached at the other end thereof to the leading edge slat (2) by a universal joint (11).

2. An anti-icing arrangement as in claim 1 in which the telescopic duct has an axis (10) of telescopic movement which generally follows the path of deployment of the leading edge slat (2).

3. An anti-icing arrangement as in claim 1 or 2 in which the universal joint (11) allows limited relative translational movement between the leading edge slat (2) and a said tubular element (8) attached to the universal joint (11).

4. An anti-icing arrangement as in claim 1, 2 or 3 in which at least two telescopic tubular elements (7,8) of the duct slide with respect to one another upon bearings (28, 29, 30) which permit limited angular deflection of their neutral axes (10) with respect to one another.

5. An anti-icing arrangement as in any preceding claim wherein the universal joint (11) comprises a pair of axially overlapping elements (12, 13) having a clearance fit therebetween, a first (12) of said elements having a generally cylindrical surface (14) slidably engagable by sealing means on the second (13) of said elements.

6. An anti-icing arrangement as in claim 5 in which the sealing means comprises at least one annular ring (19, 20, 21) in at least one groove (18) formed in the second annular element (13).

7. An anti-icing arrangement as in claim 6 in which the at least one ring comprises three rings (19, 20, 21).

8. An anti-icing arrangement as in claim 6 or 7 in which the sealing means includes a groove (18) formed in the second annular element (13) axially spaced from the at least one groove (17) to receive a further annular ring (22) of resilient deformable material.

9. An anti-icing arrangement as in any of claims 6 to 8 in which the second annular element (13) has a surface (16) co-extensible with the surface (14) of the first element (12), slidable with respect thereto, and in which said at least one groove (18) is formed.

10. An anti-icing arrangement as in claim 9 in which the co-extensible surface (16) of the second annular element (13) is relieved in a radial direction at either end.

11. An anti-icing arrangement as in any of claims 5 to 10 in which the universal joint (11) includes an anti-rotating device (26, 27, 31) to prevent relative axial rotation between the annular elements (12, 13) thereof.

12. An anti-icing arrangement as in any preceding claim in which a said tubular element (6) of the duct (3) attached to the fixed wing portion (1) has the largest cross sectional area of the tubular elements (6, 7, 8) of the duct (3) whereby the other tubular elements thereof (7,8) telescope within said element (6) attached to the fixed wing portion (1).

## Patentansprüche

1. Enteisungsanordnung für eine Flugzeugtragfläche, die einen festen Tragflächenteil (1), einen an der Vorderkante angeordneten Vorflügel (2), der bezüglich des festen Tragflächenteils zwischen einer Reiseflug-Bezugsstellung und einer ausgefahrenen Hochauftriebs-Stellung beweglich ist, und einen teleskopartigen Kanal (3) einschließt, der teleskopartige rohrförmige Elemente (6, 7, 8) zum Hindurchleiten von erwärmter Luft zwischen dem festen Tragflächenteil (1) und dem Vorflügel (2) unabhängig von deren Relativstellungen aufweist, dadurch gekennzeichnet, daß der Kanal (3) an seinem einen Ende starr mit dem festen Tragflächenteil (1) verbunden ist und an seinem anderen Ende über ein Universalgelenk (11) mit dem Vorflügel (2) verbunden ist.

2. Enteisungsanordnung nach Anspruch 1, bei der der teleskopartige Kanal eine Achse (10) der teleskopartigen Bewegung aufweist, die allgemein der Bahn der Ausfahrbewegung des Vorflügels (2) folgt.

3. Enteisungsanordnung nach Anspruch 1 oder 2, bei der das Universalgelenk (11) eine begrenzte relative Translationsbewegung zwischen dem Vorflügel (2) und demjenigen rohrförmigen Element (8) ermöglicht, das an dem Universalgelenk befestigt ist.

4. Enteisungsanordnung nach Anspruch 1, 2 oder 3, bei der zumindestens zwei der teleskopartigen rohrförmigen Elemente (7, 8) des Kanals bezühlich einander auf Lagern (28, 29, 39) gleiten, die eine begrenzte Winkelauslenkung ihrer neutralen Achsen (10) bezüglich einander ermöglichen.

5. Enteisungsanordnung nach einem der vorhergehenden Ansprüche, bei der das Universalgelenk (11) zwei sich in Axialrichtung überlappende Elemente (12, 13) umfaßt, die eine Spielpassung zwischen sich aufweisen, wobei ein erstes (12) der Elemente eine allgemein zylindrische Oberfläche (14) aufweist, die gleitend mit Dichtungseinrichtungen auf dem zweiten (13) der Elemente in Eingriff bringbar ist.

6. Enteisungsanordnung nach Anspruch 5, bei der die Dichtungseinrichtungen zumindestens einen kreisringförmigen Ring (19, 20, 21) in zumindestens einer Nut (18) umfassen, die in dem zweiten kreisringförmigen Element (13) ausgebildet ist.

7. Enteisungsanordnung nach Anspruch 6, bei der der zumindestens eine Ring drei Ringe (19, 20, 21) umfaßt.

8. Enteisungsanordnung nach Anspruch 6 oder 7, bei der die Dichtungseinrichtungen eine Nut (18) einschließen, die in dem zweiten kreisringförmigen Element (13) in axialem Abstand von der zumindestens einen Nut (17) ausgebildet ist, um einen weiteren kreisringförmigen Ring (22) aus elastischem verformbarem Material aufzunehmen.

9. Enteisungsanordnung nach einem der Ansprüche 6 bis 8, bei der das zweite ringförmige Element (13) eine Oberfläche (16) aufweist, die die gleiche Erstreckung wie die Oberfläche (14) des ersten Elementes (12) aufweist und gegenüber dieser verschiebbar ist, und in der die zumindestens eine Nut (18) ausgebildet ist.

10. Enteisungsanordnung nach Anspruch 9, bei der die sich über die gleiche Strecke erstreckende Oberfläche (16) des zweiten ringförmigen Elementes (13) in radialer Richtung an jedem Ende hinterschnitten ist.

11. Enteisungsanordnung nach einem der Ansprüche 5 bis 10, bei der das Universalgelenk (11) eine eine Drehung verhindernde Einrichtung (26, 27, 31) einschließt, um eine relative Axialdrehung zwischen seinen ringförmigen Elementen (12, 13) zu verhindern.

12. Enteisungsanordnung nach einem der vorhergehenden Ansprüche, bei dem das eine an dem festen Tragflächenteil (1) befestigte rohrförmige Element (6) des Kanals (3) die größte Querschnittsfläche der rohrförmigen Elemente (6, 7, 8) des Kanals aufweist, so daß dessen andere rohrförmige Elemente (7, 8) teleskopartig in dem an dem festen Tragflächenteil (1) befestigten Element (6) verschiebbar sind.

## Revendications

1. Dispositif d'antigivrage pour une aile d'aéronef, comprenant une partie d'aile fixe (1), un bec de bord d'attaque (2) mobile par rapport à celle-ci, entre une position de croisière de référence et une position déployée d'hypersustentation, et un conduit télescopique (3) ayant des éléments tubulaires télescopiques (6, 7, 8) pour acheminer de l'air chauffé entre la partie d'aile fixe (1) et le bec de bord d'attaque (2), indépendamment des positions relatives de ceux-ci, caractérisé en ce que le conduit (3) est rigidement fixé à la partie d'aile fixe (1) par l'une de ses extrémités et en ce qu'il est fixé par son autre extrémité au bec de bord d'attaque (2) par un joint universel (11).

2. Dispositif d'antigivrage selon la revendication 1, dans lequel le conduit télescopique a un axe (10) de mouvement télescopique qui suit globalement le trajet de déploiement du bec de bord d'attaque (2).

3. Dispositif d'antigivrage selon la revendication 1 ou 2, dans lequel le joint universel (11) permet un mouvement de translation relatif limité entre le bec de bord d'attaque (2) et l'un desdits éléments tubulaires (8), fixé au joint universel (11).

4. Dispositif d'antigivrage selon la revendication 1, 2 ou 3, dans lequel au moins deux éléments tubulaires télescopiques (7, 8) du conduit coulissent l'un par rapport à l'autre sur des paliers (28, 29, 30) qui permettent une déviation angulaire limitée de leurs axes neutres (10) l'un par rapport à l'autre.

5. Dispositif d'antigivrage selon l'une quelconque des revendications précédentes, dans lequel le joint universel (11) comprend une paire d'éléments à recouvrement axial (12, 13) ayant entre eux un jeu, un premier (12) desdits éléments ayant une surface globalement cylindrique (14) propre à venir en contact par glissement, avec un moyen d'étanchéité sur le second (13) desdits éléments.

6. Dispositif d'antigivrage selon la revendication 5, dans lequel le moyen d'étanchéité comprend au moins une bague d'étanchéité (19, 20, 21) dans au moins une rainure (18) formée dans le second élément annulaire (13).

7. Dispositif d'antigivrage selon la revendication 6, dans lequel la au moins une bague comprend trois bagues (19, 20, 21).

8. Dispositif d'antigivrage selon la revendication 6 ou 7, dans lequel le moyen d'étanchéité comprend une rainure (18) formée dans le second élément annulaire (13) avec un écartement axial par rapport à la au moins une rainure (17), afin de recevoir une autre bague annulaire (22) en une matière élastiquement déformable.

9. Dispositif d'antigivrage selon l'une quelconque des revendications 6 à 8, dans lequel le second élément annulaire (13) a une surface (16) co-extensible avec la surface (14) du premier élément (12) et propre à glisser par rapport à celle-ci, et dans laquelle est formée ladite au moins une rainure (18).

10. Dispositif d'antigivrage selon la revendication 9, dans lequel la surface co-extensible (16) du second élément annulaire (13) présente une dépouille dans un sens radial à chaque extrémité.

11. Dispositif d'antigivrage selon l'une quelconque des revendications 5 à 10, dans lequel le joint universel (11) comprend un dispositif antirotation (26, 27, 31) pour empêcher une rotation axiale relative entre ses éléments annulaires (12, 13).

12. Dispositif d'antigivrage selon l'une quelconque des revendications, dans lequel ledit élément tubulaire (6) du conduit (3), qui est fixé à la partie d'aile fixe (1) a la superficie de section transversale la plus grande parmi les éléments tubulaires (6, 7, 8) du conduit (3), les autres éléments tubulaires (7, 8) de celui-ci rentrant de manière télescopique à l'intérieur dudit élément (6) fixé à la partie d'aile fixe (1).
